# EUROPEAN PATENT APPLICATION

(11) **EP 2 639 164 A1**
(43) Date of publication of application: **18.09.2013**
(21) Application number: 13154034.6
(22) Date of filing: 05.02.2013
(51) Int. Cl.: B65B 25/04, B65B 35/24, B65B 23/00

(54) **A device for packaging fruit or vegetables**

(30) Priority: 14.03.2012 IT MO20120064
(71) Applicant: B. Longobardi Srl., 39011 Lana (Bolzano) (IT)
(72) Inventor: Longobardi, Bruno, 39011 Lana (BOLZANO) (IT)
(74) Representative: Casadei, Giovanni

(57) **Abstract**

A device for packaging fruit or vegetables, comprising: a first conveyor device (10), predisposed to convey a plurality of products (100) along a first advancement direction (X) and to unload each item (100) individually from at least one side with respect to the advancement direction (X); a grip layer (30), arranged on one side of the first conveyor device (10), predisposed to receive the products (100) unloaded from the first conveyor device and to slow down and stop the movement of the products (100) in a progressive and controlled manner (100).

## Description

The subject matter of the present invention is a device for packaging fruit or vegetables.

Machines for packaging fruit or vegetables comprising a first conveyor device predisposed to convey a plurality of products along a direction of advancement are present on the market. This first conveyor device normally comprises a plurality of supports, each of which is structured to support at least a product resting thereon. The supports are aligned along the first advancement direction and are associated with a motor element, for example in the form of a sprocket chain, which is movable along the direction of advancement. Each support is associated with the rotor element with the possibility of rotating at least in one direction about an axis parallel to the direction of advancement. Each support can rotate with respect to an axis parallel to the direction of advancement between a conveying position, in which the support sustains the product in a substantially stable position for advancement along the first direction of advancement, and an unloading position, in which the support is laterally inclined with respect to the direction of advancement and the product can be unloaded from the side of the support. The first conveyor device is further supplied with detection means predisposed to detect one or more particular characteristics for each product, for example the weight, dimensions, shape, color, the presence of surface defects or other characteristics.

The machines available on the market further comprise a second conveyor device, which is predisposed to convey a plurality of containers, for example crates, aligned along a second conveying direction parallel to the first conveying direction. The containers are conveyed in the same conveying direction as the products on the first conveyor device. The second conveyor device performs the task of moving a plurality of containers parallel to the products on the first conveyor device.

Between the first conveyor device and the second conveyor device, there is located an intermediate conveyor device comprising a plurality of discrete containers that translate at the same speed and in the same direction with respect to the first conveyor device and the second conveyor device. Each one of the discrete containers of the intermediate conveyor device is intended to receive a group of products unloaded from the first conveyor device so as to form groups of products that are homogeneous in terms of characteristics such as weight and/or dimensions and/or other characteristics. Each discrete container of the intermediate conveyor device moves in a manner that is synchronized with a container moving on the second conveyor device. In this manner, a group of homogeneous products contained in one of the discrete containers of the intermediate conveyor device can be manually transferred into a respective container moving on the second conveyor device by workers arranged alongside the machine. Each worker picks up a certain number of products from the discrete containers and places them in the corresponding container. The same procedures are carried out by the next workers until the container is filled, and so on for all the containers passing in succession in front of the workers.

The currently available machines have several drawbacks. First of all, the structure of the intermediate conveyor device is relatively complex and quite rigid. In fact, the presence of the discrete containers constitutes a considerable structural drawback of the intermediate conveyor device. Moreover, it is very difficult to change the dimensions of the discrete containers if necessary, for example in the event of a change in the containers for packaging the products.

The aim of the present invention is to offer a device for packaging fruit and vegetables that makes it possible to overcome the drawbacks of the currently available devices.

An advantage of the device according to the present invention is that of being markedly simpler than the currently available devices.

Another advantage of the device according to the present invention is that it can adapt to final containers of any dimensions, substantially without requiring any adjustments.

Further characteristics and advantages of the present invention will become clearer from the following detailed description of an embodiment of the invention, which is illustrated by way of non-limiting example in the attached figures, wherein:
- Figure 1 is a schematic side view of the device according to the present invention;
- Figure 2 is a schematic view of the device along the sectional plane II-II of Figure 1;
- Figure 3 is a top view of the device according to the present invention.

The device according to the present invention comprises a first conveyor device (10), predisposed to convey a plurality of products (100) along a first advancement direction (X) and to unload each product (100) individually from at least one side with respect to the advancement direction (X).

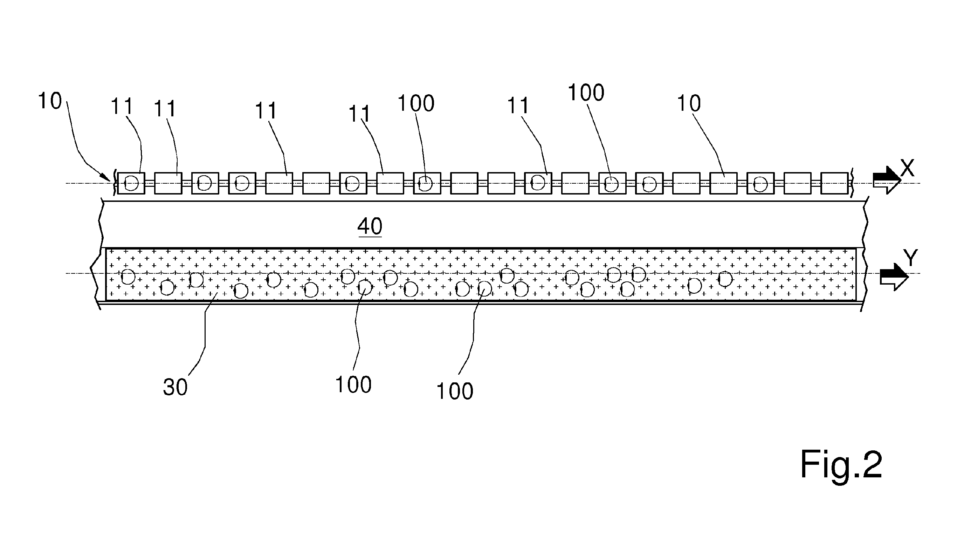

The first conveyor device (10) preferably comprises a plurality of supports (11), each of which is structured so as to support at least a product (100) resting thereon. The supports (11) are aligned along the first advancement direction (X) and are associated with a motor element (12), for example in the form of a sprocket chain, which is movable along the direction of advancement (X). Each support (11) is associated with the rotor element with the possibility of rotating at least in one direction about an axis parallel to the direction of advancement (X). Each support (11) can rotate with respect to an axis parallel to the direction of advancement between a conveying position, in which the support sustains the product (100) in a substantially stable position for advancement along the first direction of advancement (X), and an unloading position, in which the support (11) is laterally inclined with respect to the direction of advancement (X) and the product (100) can be unloaded from the side of the support (11). An unloading means (13) is predisposed to determine the rotation of each support (11) from the conveying position to the unloading position in a desired position along the first advancement direction (X). With reference to Figure 2, the first conveyor device (10) is substantially structured so as to convey the products (100) along the first direction of advancement and to make it possible to unload each product (100) at any point of the path completed along the advancement direction (X). The first conveyor device is further supplied with detection means, which is not illustrated, predisposed to detect one or more particular characteristics for each product (100), for example the weight, dimensions, shape, color, the presence of surface defects or other characteristics.

An example of a conveyor device of the type described above is found in numerous gauging machines currently present on the market and well known to a person skilled in the field. For this reason, the first conveyor device will not be described in greater detail herein.

The device according to the present invention comprises a grip layer (30) arranged on one side of the first conveyor device (10), and predisposed to receive the products (100) unloaded from the first conveyor device and to slow down and stop the movement of the products (100) in a progressive and controlled manner. The grip layer (30) is arranged at a lower height with respect to the first conveyor device (10), so that the unloading of the products (100) from the first conveyor device (10) to the grip layer (30) can take place substantially by the effect of gravity.

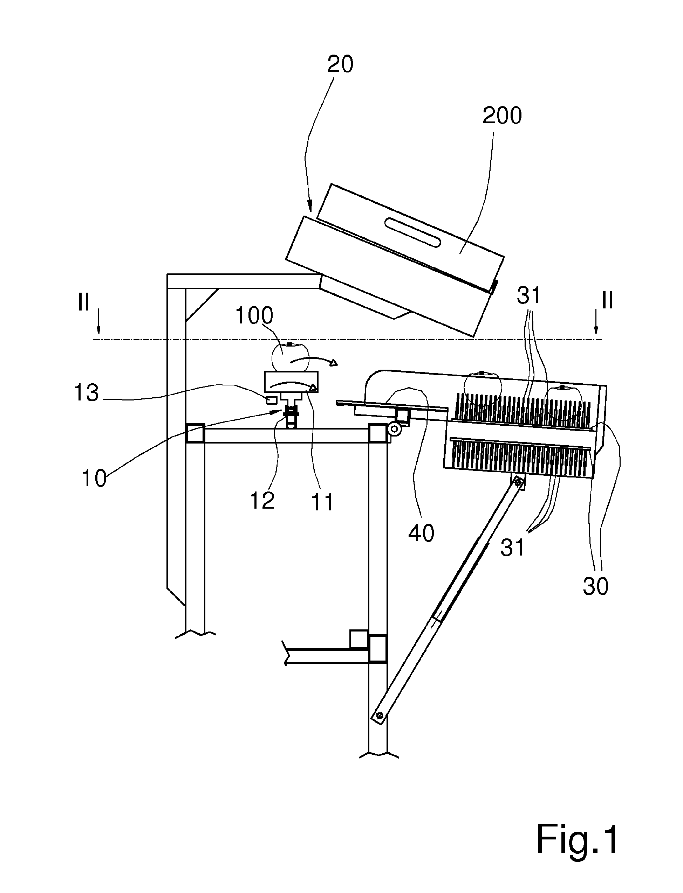

In a preferred embodiment, the grip layer (30) is continuous. It preferably comprises a plurality of flexible stem-like structures (31). As can be seen in Figure 1, the stem-like structures (31) protrude from the surface of the grip layer (30) forming a particularly soft mat. Preferably, the stem-like structures (31) are made of a material having a relatively high coefficient of surface friction, such as a silicone-based material. The flexibility and the friction produced by the stem-like structures (31) enable shock absorption relating to the impact of the products (100) on the grip mat (30) in the unloading stages from the first conveyor device (10), and also make it possible to slow down and stop the rolling and the sliding of the products (100) in a progressive manner.

Therefore, owing to the properties of the grip layer (30) it is possible to establish with marked precision the area in which each product (100) will stop following unloading from the first conveyor device (10). This makes it possible for example to form groups of products (100) on the grip layer (30), each group being separated from the other by a desired distance. Advantageously, the products (100) can be unloaded from the first conveyor device (10) to form groups that are relatively homogeneous in terms of particular characteristics such as weight, dimensions, surface color or other characteristics. The continuity of the grip layer (30), that is, the absence any element for the division thereof in sectors, offers the most complete flexibility as regards the composition of homogeneous groups of products.

In a preferred embodiment of the device, the grip layer (30) is movable along a second conveying direction (Y) parallel to the first conveying direction (X). For this purpose, the grip layer (30) is in the form of a conveyor belt closed in a loop so as to form an upper section, designed to receive and convey the products (100), and a lower, return section. Rollers or pulleys, of a type known to a person skilled in the field, may be utilized to motorize the grip layer (30). Preferably, the grip layer (30) is movable in the same direction as the first conveyor device (10). As an alternative, the grip layer (30) can be movable in an opposite direction with respect to the first conveyor device (10). The realization of the grip layer (30) in a continuous form considerably simplifies the motorization device for the grip layer, which can substantially be structured in the same manner as a conveyor belt.

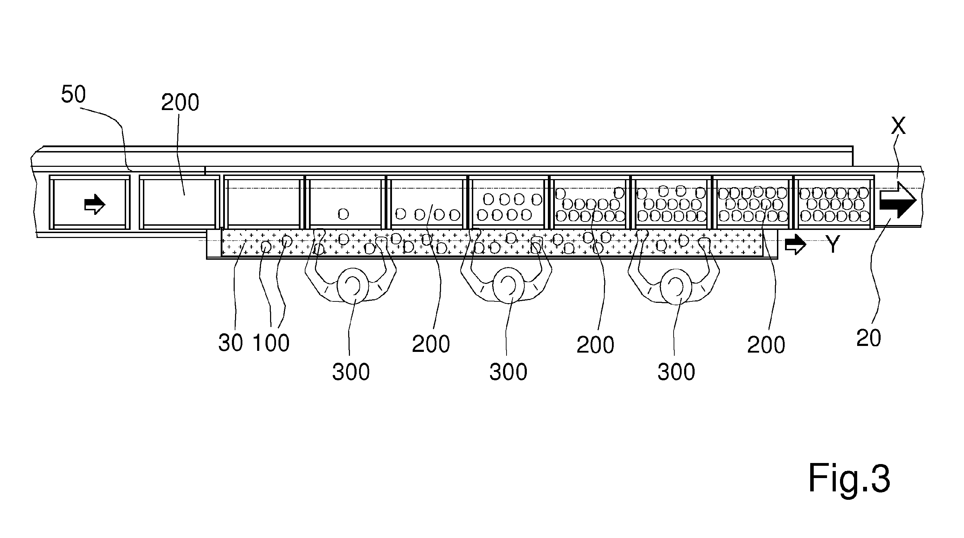

The device constituting the subject matter of the invention can also be provided with a second conveyor device (20), predisposed to convey a plurality of containers (200) aligned along a second conveying direction (Y) parallel to the first conveying direction (X). The containers (200) are preferably conveyed in the same conveying direction as the grip layer (30). As an alternative, if the grip layer (30) is movable in an opposite direction with respect to the first conveyor device (10), the second conveyor device will also be movable in an opposite direction with respect to the first conveyor device (10). The presence of a second conveyor device (20) for the containers (200) makes it possible to move a plurality of containers (200) in synchrony with the grip layer (30) and thus also with the products (100). In particular, by realizing a grouped arrangement of the products (100) on the grip layer (30), it is possible to convey a container (200) alongside each group of products (100) as shown in Figure 3. In other words, while the products (100) and containers (200) are being conveyed, it is possible to align each group of products (100) with a container (200) in a transverse direction with respect to the conveying directions (X,Y). As schematized in Figure 3, this makes it possible to carry out manual packaging of the products (100) inside the containers (200) in line while the products (100) and the containers (200) are being conveyed. A certain number of workers (300) can arrange themselves alongside the device and, as the products and the containers advance, they can insert a certain number of products (100), which are passing within the working range thereof, inside the respective container (200) that is advancing in synchrony with the products (100). Considering an individual container (200), it then passes within the working range of the workers (300), each one of whom will arrange a certain number of products (100) therein, so that the last worker completes the filling of the container (200).

In order to limit the range and breadth of movements of the workers (300), and to enable the workers to maintain an upright position, the second conveyor device (20) is located in an upper position with respect to the grip layer (30), as can be seen in Figure 1. Preferably, the second conveyor device (20) is located above the first conveyor device (10) and partially projects over the grip layer (30).

In the preferred embodiment of the device, an inclined plane (40) è interposed between the first conveyor device (10) and the grip layer (30). The inclined plane (40), which is arranged with a downward inclination from the first conveyor device (10) towards the grip layer (30), receives the products (100) unloaded from the first conveyor device (10) and brings them to the grip layer (30). The products unloaded from the first conveyor device (10) roll and/or slide down the inclined plane (40) and reach the grip layer (30). The inclined plane (40) substantially makes it possible to arrange the grip layer (30) at a desired distance with respect to the first conveyor device, so that it is possible to arrange the second conveyor device (20) in the previously described position.

Preferably, the grip layer (30) is downwardly inclined away from the first conveyor device (10). This inclination facilitates controlled sliding of the products (100) away from the first conveyor device (10), so that the space required for unloading other products (100) is always available.

The device according to the present invention can also be supplied with a store (50) for containers (200), which is only partially shown in Figure 3. This store (50) is preferably in the form of a lane, which may or may not be motorized, and along which a certain number of containers (200) can be placed so as to replace the containers (200) filled with products (100) that have been removed from the second conveyor device (20). The store (50) is located in-line to the second conveyor device (20).

## Claims

1. A device for packaging fruit or vegetables, comprising: a first conveyor device (10), predisposed to convey a plurality of products (100) along a first advancement direction (X) and to unload each item (100) individually from at least one side with respect to the advancement direction (X); **characterized in that** it comprises a grip layer (30), arranged on one side of the first conveyor device (10), predisposed to receive the products (100) unloaded from the first conveyor device and to slow down and stop the movement of the products (100) in a progressive and controlled manner.

2. The device according to claim 1, wherein said grip layer (30) comprises a plurality of flexible stem-like structures (31).

3. The device according to claim 1, wherein said grip layer (30) is movable along a second conveying direction (Y) parallel to the first conveying direction (x).

4. The device according to claim 3, wherein said grip layer (30) is movable in the same direction as the first conveyor device (10).

5. The device according to claim 3, wherein said grip layer (30) is movable in an opposite direction with respect to the first conveyor device (10).

6. The device according to claim 1, comprising a second conveyor device (20), predisposed to convey a plurality of containers (200) that are aligned along a second conveying direction (Y) parallel to the first conveying direction (X).

7. The device according to claim 6, wherein the second conveyor device (20) is movable in the same direction as the grip layer (30).

8. The device according to claim 7, wherein said second conveyor device (20) is located in an upper position with respect to the grip layer (30).

9. The device according to claim 1, comprising an inclined plane (40) interposed between the first conveyor device (10) and the grip layer (30), said inclined plane (40) being arranged with a downward inclination from the first conveyor device (10) towards the grip layer (30).

10. The device according to claim 1, wherein the grip layer (30) is downwardly inclined away from the first conveyor device (10).

11. The device according to claim 6, comprising a store (50) for containers (200) that is structured in the form of a lane, along which a certain number of containers (200) can be placed so as to replace the containers (200) filled with products (100) that have been removed from the second conveyor device (20), said store (50) being located in-line to the second conveyor device (20).
